Europäisches Patentamt

European Patent Office

Office européen des brevets

(11) Veröffentlichungsnummer: **0 227 164**
**A2**

(12) **EUROPÄISCHE PATENTANMELDUNG**

(21) Anmeldenummer: 86202172.2

(22) Anmeldetag: 04.12.86

(51) Int. Cl.⁴: **H 04 J 7/00**
**H 04 L 5/04**

(30) Priorität: 16.12.85 DE 3544393

(43) Veröffentlichungstag der Anmeldung:
01.07.87 Patentblatt 87/27

(84) Benannte Vertragsstaaten:
AT CH DE FR GB IT LI SE

(71) Anmelder: **Philips Patentverwaltung GmbH**
**Billstrasse 80**
**D-2000 Hamburg 28(DE)**

(84) Benannte Vertragsstaaten:
**DE**

(71) Anmelder: **N.V. Philips' Gloeilampenfabrieken**
**Groenewoudseweg 1**
**NL-5621 BA Eindhoven(NL)**

(84) Benannte Vertragsstaaten:
**CH FR GB IT LI SE AT**

(72) Erfinder: **Krick, Wolfgang, Dipl.-Ing.**
**Gartenstrasse 15b**
**D-8560 Lauf(DE)**

(74) Vertreter: **Dreykorn-Lindner, Werner et al,**
**Philips Patentverwaltung GmbH Postfach 10 51 49**
**Billstrasse 80**
**D-2000 Hamburg 28(DE)**

(54) Diensteintegrierendes, digitales Nachrichtenübertragungssystem mit Einrichtungen zur gemeinsamen Übertragung von Schmalband- und Breitbandsignalen.

(57) In einem zukünftigen Breitband-ISDN mit vorzugsweise optischer Teilnehmeranschlußleitung kann der Teilnehmer nicht nur auf die schmalbandigen ISDN-Dienste sondern auch auf die Breitband-Dienste (z.B. Bewegtbilddienste) zugreifen. Zur übertragungstechnischen Integration von niederratigen ISDN-Signalen und hochratigen Breitbandsignalen kann die elektrische Multiplexbildung durch eine Überlagerung dieser Signale in voneinander getrennten Frequenzübertragungsbereichen (Frequenzmultiplex) oder unter Anwendung einer Amplituden- oder Phasenmodulation des hochratigen Signals vorgenommen werden.

Zur Vermeidung der bei Frequenzmultiplex für gute Übertragungsqualität verlangten hohen Filter- und Linearitätsanforderung bzw. zur Sicherstellung eines Notbetriebs ohne das hochratige Signal, welcher bei einem Modulations-Verfahren oder Zeitmultiplex-Verfahren erschwert ist, wird eine amplitudenmäßige Überlagerung der beiden Signale in sich möglicherweise überlappenden Frequenzbändern vorgenommen. Sendeseitig werden das Schmalbandund das Breitbandsignal mit einer vom Bitratenverhältnis abhängigen Gewichtung einander additiv überlagert und empfangsseitig wird aus dem in der Amplitude mehrstufigen Summensignal das Schmalbandsignal durch Amplituden-Hüll-kurven-Demodulation und das Breitbandsignal durch Amplitudenbegrenzung zurückgewonnen.

./...

EP 0 227 164 A2

FIG.1

Philips Patentverwaltung GmbH
N.V. Philips'Gloeilampenfabrieken

PH
24  **0227164**

## Diensteintegrierendes, digitales Nachrichtenübertragungssystem mit Einrichtungen zur gemeinsamen Übertragung von Schmalband- und Breitbandsignalen

Die Erfindung betrifft ein diensteintegrierendes, digitales Nachrichtenübertragungssystem gemäß dem Oberbegriff des Patentanspruchs 1.

Beim Aufbau eines diensteintegrierenden digitalen Nachrichtennetzes ISDN sind für die Zusammenarbeit zwischen Geräten der Sprach-, Text-, Daten- und Bildkommunikation Vorkehrungen für den Netzzugang und die Kommunikationsabwicklung zu treffen. In der Zeitschrift telcom report 6 (1983) Heft 3, Seiten 166 ff. ist die Architektur des Teilnehmerzugangs beschrieben, welche in der CCITT-Empfehlung I. 430 festgelegt worden ist. An der Schnittstelle zwischen Netz und Teilnehmer, der sogenannten SO-Schnittstelle, stehen für die Nachrichtenübertragung gleichzeitig und in beiden Richtungen zwei Nutzkanäle (B-Kanäle) mit jeweils 64 kbit/s und ein Signalisierungskanal (D-Kanal) mit 16kbit/s zur Verfügung.

Über den D-Kanal wird die für beide B-Kanäle erforderliche Teilnehmersignalisierung übertragen. Diese Teilnehmersignalisierung umfaßt das Übermitteln allgemeiner Informationen zwischen angeschlossenen Teilnehmer-Endgeräten und Netz, z.B. über vorliegende und nicht erledigte fremde Verbindungswünsche, Gebührenhinweise, sowie das Übermitteln von Informationen zur dienstspezifischen Behandlung der Verbindungen auf den B-Kanälen einschließ-B-Kanälen einschließlich der Steuerung des Verbindungsaufbaus bei wechselnder Endgerätenkonfiguration (Teilnehmerstationen mit mehreren Geräten an einem Anschluß).

Die Teilnehmerstationen sind im ISDN mit einem sogenannten Netzabschluß NT verbunden, welcher über die Anschlußleitung mit einem Leitungsabschluß LT der Vermittlungsstelle verbunden ist. Leitungsabschluß LT und Netzabschluß NT übernehmen die übertragungstechnischen Aufgaben
des Sendens und Empfangens der Schmalbandsignale mit
einer Nettobitrate von 144 kbit/s, womit die Aufgaben der
Taktversorgung und Synchronisierung, der Fehlereingrenzung durch Schleifenbildung und der Fernspeisung verbunden sind.

An der S0-Schnittstelle können im ISDN bis zu acht Endgeräte angeschlossen werden, welche unabhängig voneinander
auf den D-Kanal zugreifen können. Um zu erreichen, daß
während ein Teilnehmer-Endgerät die Nachricht überträgt
nicht andere Teilnehmer-Endgeräte mit der Nachrichtenübertragung beginnen, ist in der CCITT-Empfehlung I. 430
festgelegt, daß zunächst alle von den Endgeräten über den
D-Kanal zum Netzabschluß gelangenden D-Bits neben ihrer
Übertragung zur Vermittlungsstelle einzeln in einem
speziellen D-Echokanal über die S0-Schnittstelle zu den
Endgeräten zurückgesendet werden. Die elektrischen Eigenschaften der S0-Schnittstelle sind so gewählt, daß eine
logische "0" immer dominiert, wenn verschiedene Endgeräte
gleichzeitig eine logische "0" und eine logische "1" im
D-Kanal senden (wired-or). Im D-Echokanal (E-Bit) wird
vom Netzabschluß NT eine logische "0" zurückgesendet, so
daß jenes Endgerät, welches zum Netzabschluß NT eine
logische "1" gesendet hat, diese Abweichung erkennt und
seine Meldung noch vor dem Aussenden des nächsten

0227164

D-Bits abbricht.

In einem zukünftigen Breitband-ISDN mit vorzugsweise optischer Teilnehmeranschlußleitung sind außer den vorgenannten ISDN-Schmalband-Diensten Dienste mit höheren Übertragungsbitraten (z.B. Bewegtbilddienste) geplant. Während bei der Benutzung bestehender Kupferleitungen diese Integration auf Dienste beschränkt ist, die mit höchstens zwei 64 kbit/s-B-Kanälen auskommen, entfallen hierbei Einschränkungen bezüglich der Kapazität der Anschlußleitung. Zum Netzzugang an der Breitband-Schnittstelle, beim Anschluß eines Breitband-Endgeräts, ist im Hinblick auf die Integration von Breitband-Diensten auf der Teilnehmeranschlußleitung ein Zugriffsverfahren festzulegen. Soll der Zugriff des Breitband-Endgeräts unter Anwendung des in der CCITT-Empfehlung I. 430 festgelegten Zugriffsverfahren erfolgen, so ist eine mögliche Lösung hierfür der Anschluß des Breitband-Endgeräts über ein Leitungsvielfach an den Netzabschluß NT. Das Breitband-Endgerät ist hierfür einerseits wie ein Schmalband-Endgerät an den S0-Bus angeschlossen und ist andererseits parallel hierzu über einen Breitbandanschluß (auf dem ausschließlich die Breitbandinformation übertragen wird) an den Netzabschluß NT angeschlossen. Eine solche Lösung des gemeinsamen D-Kanal-Zugriffs weist den Nachteil auf, daß zwischen dem Breitband-Endgerät und dem S0-Bus eine zusätzliche Leitung erforderlich ist, wodurch die Forderung nach einer bereits im Endgerät erfolgenden übertragungstechnischen Integration nicht erfüllt ist.

Aus der EP-Bl 0 053 236 ist ein dienstintintegriertes, digitales Übertragungssystem bekannt, bei dem sendeseitig eine Überlagerung eines niederratigen und eines hochratigen Signals in voneinander getrennten Frequenzübertragungsbereichen vorgenommen wird. Empfangsseitig wird das empfangene Summensignal durch Frequenzfilterung in das niederratige und das hochratige Signal wieder zerlegt. Für die dabei vorgenommene frequenzmäßige Trennung des niederratigen und hochratigen Signals sind steilflankige LC-Filter erforderlich, wobei die Frequenzspektren des niederratigen und hochratigen Signals genügend weit auseinander liegen müssen. Weiterhin weist das aus der EP-B1 0 053 236 bekannte dienstintegrierte, digitale Übertragungssystem den Nachteil auf, daß durch Nichtlinearitäten bei der Übertragung auftretende Intermodulationsprodukte mittels Frequenzfilterung nicht zu beseitigen sind und dadurch die Übertragungsqualität beeinträchtigt wird.

Weiterhin ist aus der EP-A1 0 135 164 ein Übertragungssystem für digitale Signale hoher Schrittgeschwindigkeit mit Zusatzsignalübertragung bekannt, bei dem das niederratige Signal einem hochratigen Signal phasenmäßig überlagert ist, indem die Taktphase des hochratigen Signals mit dem niederratigen Signal moduliert wird. Zur Übertragung des niederratigen Signals muß das hochratige Signal - zumindestens als Taktsignal - vorhanden sein, so daß ein eingeschränkter Betrieb zur Einsparung des Leistungsverbrauchs, nämlich nur der des Schmalbandkanals, bei Ausfall der örtlichen Netzstromversorgung und Pufferbatterie-Speisung der teilnehmerseitigen Übertragungseinrichtungen nicht möglich ist.

Der Erfindung liegt die Aufgabe zugrunde, ein diensteintegrierendes, digitales Nachrichtenübertragungssystem derartig auszugestalten, daß eine einfache und wenig störanfällige Zusammenfassung der Schmalband- und Breitbandsignale zu einem Summensignal erreicht wird und daß die Aufspaltung des Summensignals in Schmalband- und Breitbandsignal auf einfache Art und Weise durchführbar ist, so daß insbesondere der Zugriff auf den im Schmalbandsignal enthaltenen Signalisierungskanal entsprechend dem in der CCITT-Empfehlung I.430 für Schmalband-Endgeräte festgelegten Zugriffsverfahren auch für Breitband-Endgeräte mit geringem Aufwand erfolgen kann.

Diese Aufgabe wird erfindungsgemäß durch ein diensteintegrierendes, digitales Nachrichtenübertragungssystem mit den Merkmalen des Patentanspruchs 1 gelöst.

Das diensteintegrierende, digitale Nachrichtenübertragungssystem gemäß der Erfindung weist den Vorteil auf, daß das niederratige Signal auch ohne das hochratige Signal übertragen werden kann. Dadurch ist auch ein Notbetrieb möglich, für den einfacher zu realisierende und weniger Leistung verbrauchende Komponenten benötigt werden als bei einer Betriebsweise mit ständiger Übertragung eines hochratigen Signals, wie beispielsweise bei einer Zeitmultiplex-Übertragung. Insbesondere für den Notbetriebsfall weist das erfindungsgemäße diensteintegrierende, digitale Nachrichtenübertragungssystem den Vorteil auf, daß wenn die teilnehmerseitigen Übertragungseinrichtungen nicht mehr aus dem örtlichen Stromversorgungsnetz sondern von einer Pufferbatterie gespeist werden, zur Leistungseinsparung nur die für die Aufrechterhaltung des Fernsprechdienstes erforderlichen Baugruppen in Betrieb bleiben und die anderen Baugruppen abgeschaltet werden.

Ein weiterer Vorteil des erfindungsgemäßen diensteintegrierenden, digitalen Nachrichtenübertragungssystem im Vergleich zu einem Übertragungssystem, bei dem die Zusam-

0227164

menfassung des niederratigen und des hochratigen Signals unter Anwendung des Zeitmultiplex-Verfahrens oder unter Anwendung einer Phasenmodulation des Breitbandsignal-Takts durchgeführt wird ist, daß zur Übertragung des hochratigen Signals der verwendete Leitungscode an den Netzstellen, die den Zugriff auf den Signalisierkanal betreffen (z.B. im NT), nicht aufgelöst werden muß, wodurch der sonst notwendige Aufwand für wiederholte Decodier-/Codier-Vorgänge zum Demultiplexen/Multiplexen eingespart werden kann.

Durch die im Patentanspruch 2 angegebene Gewichtung der Amplitude des Schmalbandsignals wird die Forderung nach einem ausreichend großen Nutzsignal-Rauschsignal-Verhältnis entsprechend der größeren Rauschbandbreite für die Breitbandübertragung auf einfache Art und Weise erfüllt.

Wird gemäß Patentanspruch 3 im Notbetriebsfall nur das Schmalbandsignal mit der für das Signal-Rausch-Verhältnis benötigten kleineren Amplitude übertragen, so lassen sich die teilnehmerseitigen Übertragungseinrichtungen mit einfachen und wenig leistungsverbrauchenden Komponenten realisieren.

Ist empfangsseitig eine Betriebs-Überwachung vorhanden (Patentanspruch 4), so kann im Notbetriebsfall auf einfache Art und Weise eine Abschaltung der nicht für die Aufrechterhaltung des Fernsprechdienstes erforderlichen Baugruppen vorgenommen werden.

Ist gemäß Patentanspruch 5 auf der Senderseite des diensteintegrierenden, digitalen Nachrichtenübertragungssystems mit einem Laser als Sender eine Verstärkungsregelung für das Summensignal vorgesehen, so kann auf einfache Art und Weise sowohl ein alterungsbedingtes Verschieben des Schwellstroms der Laserkennlinie als auch eine Veränderung der Steigung im Arbeitsbereich der Laserkennlinie ausgeglichen werden.

Hierbei kann in vorteilhafter Weise als Pilotsignal für die Verstärkungsregelung das im Sendesignal vorhandene Schmalbandsignal mitverwendet werden.

Die Erfindung wird im folgenden anhand einer in der Zeichnung dargestellten Ausführungsform näher beschrieben und erläutert. Es zeigt:

Fig. 1 ein Blockschaltbild des erfindungsgemäßen diensteintegrierenden, digitalen Nachrichtenübertragungssystems,

Fig. 2 die additive Überlagerung des niederratigen und des hochratigen Signals zu einem Summensignal und

Fig. 3 das mittels eines Lasers erzeugte Sendesignal gemäß der Erfindung.

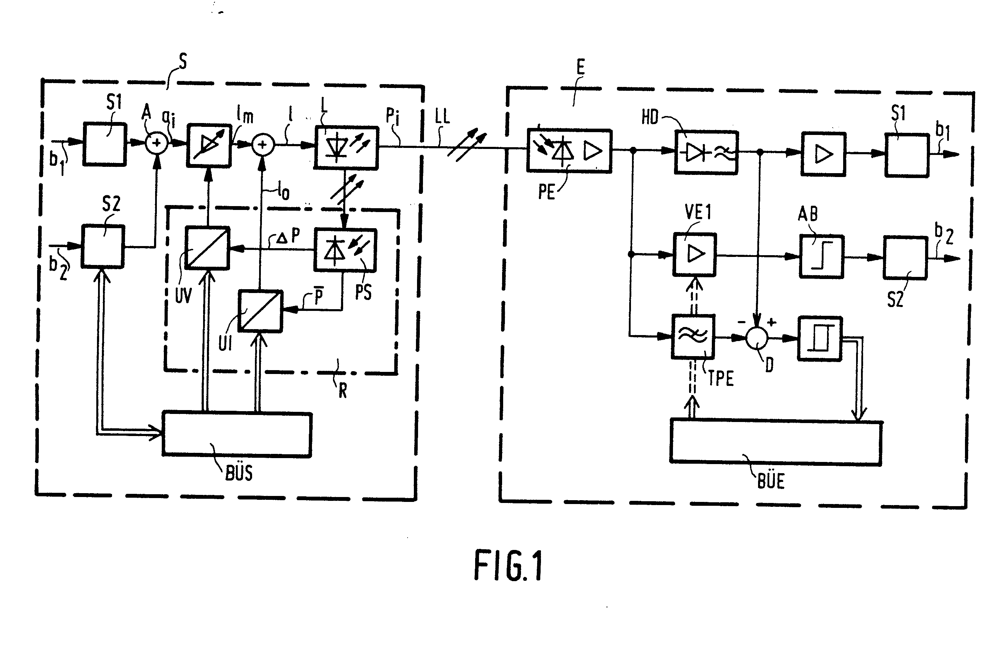

Fig. 1 zeigt als Blockschaltbild das erfindungsgemäße diensteintegrierende, digitale Nachrichtenübertragungssystem mit den zum Verständnis der Erfindung erforderlichen Einrichtungen. Das niederratige Signal $b_1$ wird einer Schnittstellenschaltung S1 und das hochratige Signal $b_2$ einer Schnittstellenschaltung S2 zugeführt. Die Ausgangssignale der Schnittstellenschaltungen S1 und S2 werden mit einer vom Bitratenverhältnis abhängigen Gewichtung einander derart überlagert, daß ein in der Amplitude mehrstufiges Summensignal $a_i$ entsteht. Diese

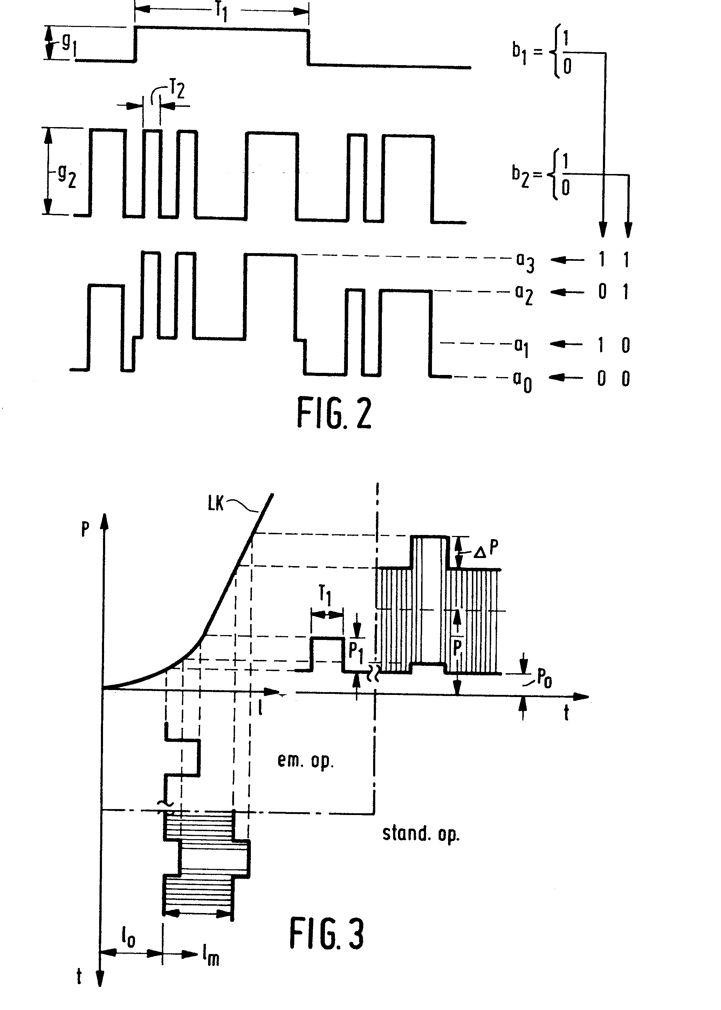

Form der Überlagerung von zwei Digitalsignalen mit unterschiedlicher Bitrate wird auch als Spektrummultiplex bezeichnet. Durch die additive Verknüpfung in einer Addierstufe A entsteht an dem Ausgang der Addierstufe A ein vierstufiges Summensignal $a_i$, dessen Stufenwerte $a_i$ (i= 0..3) den vier möglichen Binärkombinationen des niederratigen Signals $b_1$ und des hochratigen Signals $b_2$ zugeordnet sind (vgl. Fig. 2). Die sendeseitige Zusammenfassung des Schmalband- und des Breitbandsignals $b_1$ bzw. $b_2$ erfolgt mit einer vom Bitratenverhältnis abhängigen Gewichtung $g_i$ gemäß der Gleichung

$$a_i = g_0 + b_1 g_1 + b_2 g_2.$$

Diese Form des Spektrummultiplex führt zu einem modularen Aufbaukonzept, bei dem in einfacher Weise für einen Breitband-Teilnehmeranschluß die übertragungstechnische Ergänzung mit einem Breitbandkanal unter Mitverwendung der für den Schmalband-Teilnehmeranschluß bereits vorhandenen funktionalen Struktur ermöglicht ist. Für den Breitbandkanal, dessen Bitrate wesentlich höher als die der ersten Hierarchiestufe (2Mbit/s) ist, ist im Breitband-Endgerät ebenso wie im Schmalband-Endgerät eine gemeinsame Zugriffssteuerung auf einen Signalisierungskanal gegeben. Im Hinblick auf eine modulare Bedarfsanpassung (Einführungsstrategie), auf eine Notbetriebslösung (Reduktion des Leistungsverbrauch) und auch auf eine die Breitband-Verbindung einleitende Schmalbandverbindung (Dienstwechsel) wird ein Schmalband-Grundbetrieb beim dienstintegrierenden, digitalen Nachrichtenübertragungssystem ermöglicht. Weiterhin ist die Möglichkeit einer durchgängigen Leitungscodierung für das hochratige Signal vom Breitband-Endgerät bis zur Vermittlung (evt. auch durch das Breitband-Koppelfeld hindurch) gegeben.

Bei der in Fig. 1 dargestellten Ausführungsform wird im Sender S ein Laser L verwendet, der von einem additiv aus den beiden Signalen $b_1$ und $b_2$ gebildeten Strom I angesteuert wird. Weiterhin ist eine Regelung R im Sender S vorgesehen, mittels der zur Arbeitspunkteinstellung des Lasers L eine Vorstrom- und Modulationsstromregelung erfolgt, welche von der Betriebsart abhängige Sollwerte besitzt. Hierfür ist im Sender S eine Betriebs-Überwachung BÜS vorgesehen. Bei einer Veränderung der Steigung in der Laserkennlinie wird, anhand des als Pilotsignals dienenden Schmalbandsignals $b_1$ die Verstärkung des Summensignals über die Einrichtung UV derartig geregelt, daß die Amplitudenschwankung $\Delta P$ des Sendesignals P konstant bleibt. Eine Verschiebung der Laserkennlinie LK (Fig. 3) in horizontaler Richtung kann mittels einer Einrichtung UI durch Nachregelung des Vorstroms $I_0$, abhängig vom Mittelwert $\bar{P}$ des Sendesignals P, ausgeglichen werden. Mittels eines im Sender S angeordneten Photodetektors PS werden die Regelgrößen $\Delta P$ und $\bar{P}$ gewonnen.

Das Ausgangssignal P des Lasers L wird über einen Lichtleiter LL einem Empfänger E zugeführt. Mittels eines am Eingang des Empfängers E angegeordneten Photodetektors PE erfolgt die Umwandlung des optischen Signals in ein elektrisches Summensignal. Zur Trennung des so erzeugten elektrischen Summensignals in das niederratige Signal $b_1$ und das hochratige Signal $b_2$ wird dieses einerseits einem Amplituden-Hüllkurven-Detektor HD und andererseits über einen Verstärker VE1 einem Amplitudenbegrenzer AB zugeführt.

Eine derartige Zusammenfassung und Trennung des niederratigen und hochratigen Signals $b_1$, $b_2$ erfordert keine synchrone Taktbeziehung der beiden Signale zueinander und

die beiden Signale $b_1$, $b_2$ können mit sich überlappenden Frequenz-Spektren übertragen werden, da die Trennung nicht durch Frequenzselektion sondern durch Amplitudenselektion erfolgt. Für den gemeinsamen Betrieb und für die Übertragung der beiden Signale $b_1$, $b_2$ ist lediglich gefordert, daß die Binärzeichen des hochratigen Signals $b_2$ innerhalb der Schrittdauer des niederratigen Signals $b_1$ statistisch ausgeglichen sind, damit das hochratige Signal $b_2$ als Träger bei der Hüllkurven-Detektion des niederratigen Signals $b_1$ wirkt. Ein hierfür geeigneter binärer Leitungscode für das hochratige Signal $b_2$ ist beispielsweise der CMI-Code.

Weiterhin ist in dem Empfänger E eine Betriebsüberwachung BÜE vorgesehen, mittels der, durch Differenzbildung in der Differenzstufe D des Ausgangssignals des Hüllkurven- Detektors HD und des Ausgangssignals eines den Mittelwert bildenden Tiefpaßfilters TPE, ein den Betriebsfall kennzeichnendes Kriterium für das Vorhandensein des Breit- bandsignals $b_2$ ableitbar ist. Die Grenzfrequenz des Tiefpaßfilters TPE entspricht dabei der Nyquistfrequenz des Schmalbandsignals $b_1$.

In Fig. 2 ist das bei der Überlagerung der beiden Signale $b_1$ und $b_2$ entstehende vierstufige Summensignal $a_i$ im einzelnen dargestellt. Mit $a_0$ ist der bei einem optischen Sender einzustellende Vorstrom $I_0$ zu verstehen. Die Amplitudenstufe $a_1$ entsteht, wenn nur das niederratige Signal $b_1$ vorhanden ist. Die Amplitudenstufe $a_2$ entsteht, wenn nur das hochratige Signal $b_2$ vorhanden ist. Die Amplitudenstufe $a_3$ entsteht, wenn sowohl das niederratige Signal $b_1$ als auch das hochratige Signal $b_2$ vorhanden sind und einander additiv überlagert werden.

Fig. 3 zeigt anhand der Laserkennlinie LK den zeitlichen Verlauf des Laserstroms I und der Laserlichtleistung P im Notbetriebsfall (Betrieb I) und im normalen Betriebsfall (Betrieb II). Im Bereich des Kennlinienknicks der Laserkennlinie LK ist die erzeugte Laserlichtleistung P nichtlinear mit dem Laserstrom I verknüpft. Änderungen in der Laserkennlinie LK lassen sich mittels der bereits erläuterten Regelung R über die Regelgrößen $\Delta P$ und $\overline{P}$ ausgleichen. Die vom Laser L abgegebene modulierte Lichtleistung wird mit der Arbeitspunkteinstellung durch den Vorstrom $I_0$ und durch die Verstärkung des Modulationsstroms $I_m$ auf eine für die Übertragung erforderliche mittlere Leistung $\overline{P}$ für das hochratige Signal $b_2$ und auf eine Spitzenleistungsvariation $\Delta P$ für das niederratige Signal $b_1$ geregelt.

Die Überlagerung des niederratigen und des hochratigen Signals $b_1$ und $b_2$ im normalen Betriebsfall ist in Fig. 3 durch den dicken und dünnen Linienzug verdeutlicht.

Philips Patentverwaltung GmbH

N.V. Philips'Gloeilampenfabrieken

PHD 85 355 EP

24.10.1986

Patentansprüche

1. Diensteintegrierendes, digitales Nachrichtenübertragungssystem mit Einrichtungen zur gemeinsamen Übertragung von Schmalband- und Breitbandsignalen ($b_1$, $b_2$) über einen Leiter, insbesondere einen Lichtwellenleiter (LL), wobei sendeseitig die Schmalband- und Breitbandsignale ($b_1$, $b_2$) durch additive Verknüpfung (A) zusammengefaßt und empfangsseitig durch eine hierzu inverse Operation wieder zurückgewonnen werden, dadurch gekennzeichnet, daß sendeseitig jeweils ein Schmalband- und ein Breitbandsignal ($b_1$, $b_2$) derartig mit einer vom Bitratenverhältnis abhängigen Gewichtung additiv (A) überlagert werden, daß ein in der Amplitude mehrstufiges Summensignal ($a_i$) entsteht, welches zur Bildung eines mehrstufigen Sendesignals ($P_i$) verwendet wird, und daß empfangsseitig aus dem erhaltenen Summensignal ($a_i$) das Schmalbandsignal ($b_1$) durch Amplitudendemodulation (HD) und das Breitbandsignal ($b_2$) durch Amplitudenbegrenzung (AB) zurückgewonnen werden.

2. Diensteintegrierendes, digitales Nachrichtenübertragungssystem nach Anspruch 1, dadurch gekennzeichnet, daß zur additiven Überlagerung die Amplitude des Schmalbandsignals ($b_1$) derartig gewichtet wird, daß diese im Sendesignal ($P_i$) im Verhältnis zur Amplitude des Breitbandsignals ($b_2$) klein ist.

3. Diensteintegrierendes, digitales Nachrichtenübertragungssystem, bei dem die teilnehmerseitigen Einrichtungen im Normalbetriebsfall vom örtlichen Stromnetz und bei Stromnetzausfall im Notbetriebsfall von einer Pufferbatterie gespeist werden nach Anspruch 1, <u>da durch gekennzeichnet</u>, daß im Notbetriebsfall nur das Schmalbandsignal ($b_1$) mit entsprechend der niedrigeren Bitrate kleineren Amplitude gesendet wird.

4. Diensteintegrierendes, digitales Nachrichtenübertragungssystem nach Anspruch 1, <u>dadurch gekennzeichnet</u>, daß empfangsseitig aus der Differenz (Differenzstufe D) der Ausgangssignale eines Amplituden-Hüllkurven-Detektors (HD) und eines Mittelwert bildenden Tiefpaßfilters (TPE), dessen Grenzfrequenz der Nyquistfrequenz des Schmalbandsignals ($b_1$) entspricht, ein den Betriebsfall kennzeichnendes Kriterium für das Vorhandensein des Breitbandsignals ($b_2$) ableitbar ist.

5. Diensteintegrierendes, digitales Nachrichtenübertragungssystem, bei dem als Sender ein Laser (L) benutzt wird, nach Anspruch 1, <u>dadurch gekennzeichnet</u>, daß im Sender (S) bei einer alterungsbedingten Veränderung der Steigung im Arbeitsbereich der Laserkennlinie (LK) mittels einer Regelung (R) anhand des als Pilotsignal dienenden Schmalbandsignals ($b_1$) die Verstärkung des Summensignals ($a_i$) derartig geregelt wird, daß die Amplitudenschwankung ($\Delta P$) des Sendesignals ($P_i$) konstant bleibt.

FIG.1

1-II-PHD 85-355

0227164

0227164

FIG. 2

FIG. 3

2-II-PHD 85-355